# EUROPEAN PATENT SPECIFICATION

(11) **EP 4 566 843 B1**
(45) Date of publication and mention of the grant of the patent: **08.04.2026**
(21) Application number: 24212677.9
(22) Date of filing: 13.11.2024
(51) Int. Cl.: B60C 11/00, B60C 11/03

(54) **PNEUMATIC TIRE**
LUFTREIFEN
PNEUMATIQUE

(30) Priority: 05.12.2023 JP 2023205553
(43) Date of publication of application: 11.06.2025
(73) Proprietor: Sumitomo Rubber Industries, Ltd., Kobe-shi, Hyogo 651-0072 (JP)
(72) Inventor: OGAWA, Takaomi, Kobe-shi, 651-0072 (JP)
(74) Representative: Manitz Finsterwald Patent- und Rechtsanwaltspartnerschaft mbB

(56) References cited:
- DE-A1- 19 949 064
- JP-B2- 5 917 869
- US-A- 5 222 537
- US-A- 5 803 999
- US-A1- 2019 329 596

## Description

### BACKGROUND OF THE INVENTION

### Field of the Invention

The present invention relates to a pneumatic tire.

### Background Art

Japanese Laid-Open Patent Publication No. 2019-14312 discloses a pneumatic tire in which an outer surface of a tread portion on a tire meridional cross-section is specified. The tire includes a crown arc extending across the tire equator, middle arcs connected to the crown arc, and shoulder arcs connected to the middle arcs. The first radius TR1 of curvature of the crown arc, the second radius TR2 of curvature of the middle arc, and the third radius TR3 of curvature of the shoulder arc satisfy TR1>TR2>TR3. It is considered that the tire having such a configuration allows uneven wear of the tread portion to be effectively reduced.

Further relevant documents disclosing pneumatic tires with an outer tread contour consisting of three circular arcs are known from US 5 222 537 A, DE 199 49 064 A1, US 2019/329596 A1, JP 5 917869 B2 and US 5 803 999 A.

For example, in limit running on a circuit, a load higher than 100% of a load index may act on a tire. In such running, a ground contact pressure may locally become high in a region near the tread end depending on a profile of the tread portion, so that uneven wear may occur in the region or a cornering force may be lowered.

The present invention has been made in view of the aforementioned problem, and an object of the present invention is to provide a pneumatic tire that allows enhancement of uneven wear resistance and dry grip performance.

### SUMMARY OF THE INVENTION

The present invention is directed to a pneumatic tire including a tread portion. The tread portion includes a first profile extending from a tire equator toward a first tread end on a tire meridional cross-section in a standardized state. The first profile includes a first arc extending outward from the tire equator in a tire axial direction, a second arc which is connected to the first arc and extends outward in the tire axial direction, a third arc which is connected to the second arc and extends outward in the tire axial direction, and a second connection point at which the second arc and the third arc are connected to each other. Each of the first arc, the second arc, and the third arc has a single radius of curvature. A radius TR2 of curvature of the second arc is 30% to 40% of a radius TR1 of curvature of the first arc. A radius TR3 of curvature of the third arc is 25% to 40% of the radius TR2 of curvature of the second arc. The second connection point is disposed inward of the first tread end in the tire axial direction. A distance by which the second connection point and the tire equator are distant in the tire axial direction is 30% to 34% of a cross-sectional width of the tire. The third arc extends outward in the tire axial direction beyond the first tread end.

The pneumatic tire of the present invention has the above-described configuration, and can thus enhance uneven wear resistance and dry grip performance.

### BRIEF DESCRIPTION OF THE DRAWINGS

FIG. 1 is a tire meridional cross-sectional view of a pneumatic tire according to one embodiment of the present invention;
FIG. 2 shows a profile of the tire in FIG. 1 on a tire meridional cross-section;
FIG. 3 is a development of a tread portion of the tire in FIG. 1;
FIG. 4 is an enlarged view of a second lateral groove in FIG. 1;
FIG. 5(A) is a plan view of a shape of a ground contact surface of a tread portion of Example 1; and
FIG. 5(B) is a plan view of a shape of a ground contact surface of a tread portion of Comparative example 1.

### DETAILED DESCRIPTION

One embodiment of the present invention will be described below with reference to the drawings. The drawings include exaggerated expressions and the dimensional ratio in the drawings is expressed so as to be different from that of the actual structure in order to aid in understanding of the present invention. In a case where a plurality of embodiments are described, the same or common components are denoted by the same reference characters throughout the description, and repeated description is omitted.

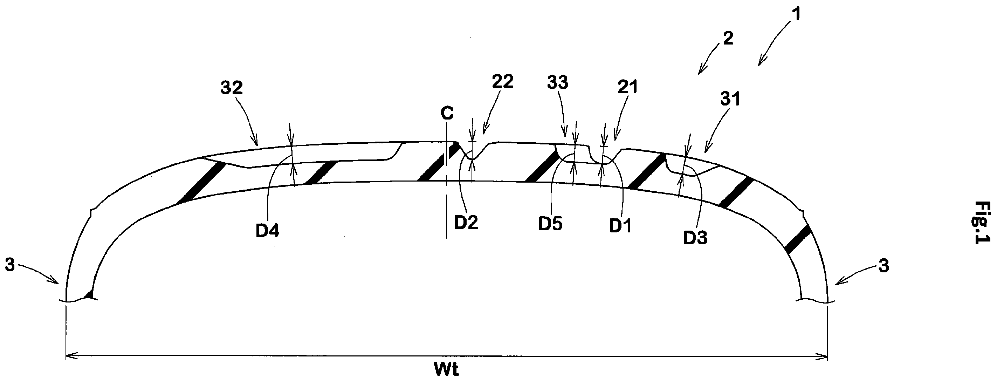

FIG. 1 is a tire meridional cross-sectional view, including a tire rotation axis (not shown), of a pneumatic tire (hereinafter, may be simply referred to as "tire") 1 of the present embodiment in a standardized state. The present invention is suitably applied to, for example, a tire, for a passenger car, which allows running on a circuit in a race. With such a tire 1, running may be performed at a relatively high speed, so that a load higher than 100% of a load index may act during the running. In the description herein, the "load index" refers to an index that is defined by the JATMA standard and represents a maximum mass allowed to be applied to a tire under a specified condition, that is, a maximum load capacity as an index number. However, the tire 1 of the present invention is not limited to such a tire as to allow running in a race.

The "standardized state" refers to a state in which the tire 1 is mounted on a standardized rim (not shown) and adjusted to be inflated to a standardized internal pressure, and no load is applied to the tire 1. In the description herein, unless otherwise specified, dimensions of components of the tire 1 are represented by values measured in the standardized state.

The "standardized rim" refers to a rim that is defined, in a standard system including a standard on which the tire 1 is based, by the standard for each tire, and is, for example, "standard rim" in the JATMA standard, "Design Rim" in the TRA standard, or "Measuring Rim" in the ETRTO standard.

The "standardized internal pressure" refers to an air pressure that is defined, in a standard system including a standard on which the tire 1 is based, by the standard for each tire, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

As shown in FIG. 1, the tire 1 has a tread portion 2. The tire 1 further includes a pair of sidewall portions 3 connected to both sides of the tread portion 2 in the tire axial direction.

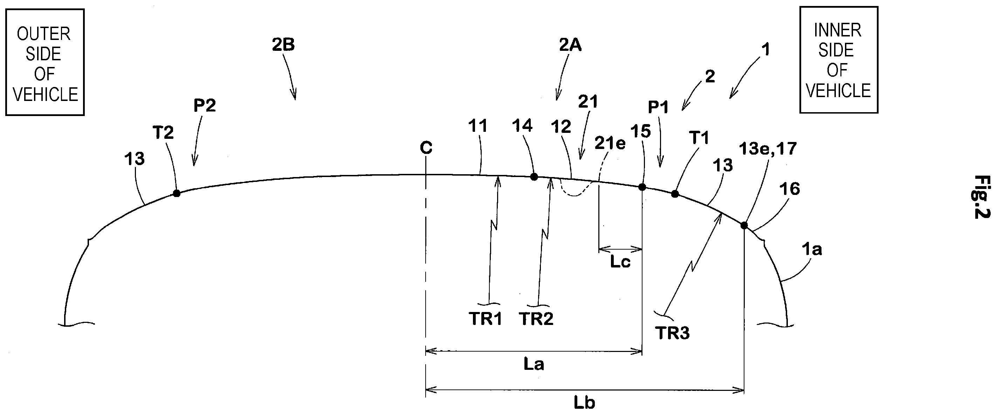

FIG. 2 shows a profile of the tread portion 2 of the present embodiment. In the description herein, the profile represents a contour 1a obtained by filling recesses provided at the surface of the tire 1 on the tire meridional cross-section in the standardized state. For example, the recesses include circumferential grooves and lateral grooves described below. As shown in FIG. 2, the tread portion 2 includes a first profile P1 extending from the tire equator C toward a first tread end T1. The first profile P1 includes a first arc 11, a second arc 12, a third arc 13, and a second connection point 15. The first arc 11 extends outward from the tire equator C in the tire axial direction. The second arc 12 is connected to the first arc 11 and extends outward in the tire axial direction. The third arc 13 is connected to the second arc 12 and extends outward in the tire axial direction. The second connection point 15 is a point at which the second arc 12 and the third arc 13 are connected to each other. The second connection point 15 is disposed inward of the first tread end T1 in the tire axial direction.

The first arc 11, the second arc 12, and the third arc 13 have a single radius TR1 of curvature, a single radius TR2 of curvature, and a single radius TR3 of curvature, respectively. The radius TR2 of curvature of the second arc 12 is 30% to 40% of the radius TR1 of curvature of the first arc 11. The radius TR3 of curvature of the third arc 13 is 25% to 40% of the radius TR2 of curvature of the second arc 12.

A distance La by which the second connection point 15 and the tire equator C are distant in the tire axial direction is 30% to 34% of a cross-sectional width Wt (shown in FIG. 1) of the tire 1. The third arc 13 extends outward in the tire axial direction beyond the first tread end T1. The first profile P1 having such a configuration allows the third arc 13 to smoothly come into contact with the ground and allows a ground contact region to be increased, outside the first tread end T1, in a running state in which the load is higher than 100% of the load index. Such increase of the ground-contact region inhibits a ground contact pressure from being locally increased near the first tread end T1, and allows uneven wear to be reduced near the first tread end T1 and inhibits a cornering force from being lowered. Therefore, the tire 1 of the present invention has excellent uneven wear resistance and dry grip performance. The cross-sectional width Wt represents the maximum width of the tire 1 in the tire axial direction as measured by excluding, for example, a rim guard (not shown) and patterns or characters at a tire side surface.

In order to effectively exhibit the above-described effects, the radius TR2 of curvature of the second arc 12 is preferably 32% or more and preferably 38% or less of the radius TR1 of curvature of the first arc 11. The radius TR3 of curvature of the third arc 13 is preferably 27% or more and preferably 38% or less of the radius TR2 of curvature of the second arc 12. The distance La by which the second connection point 15 and the tire equator C are distant in the tire axial direction is preferably 31% or more and preferably 33% or less of the cross-sectional width Wt.

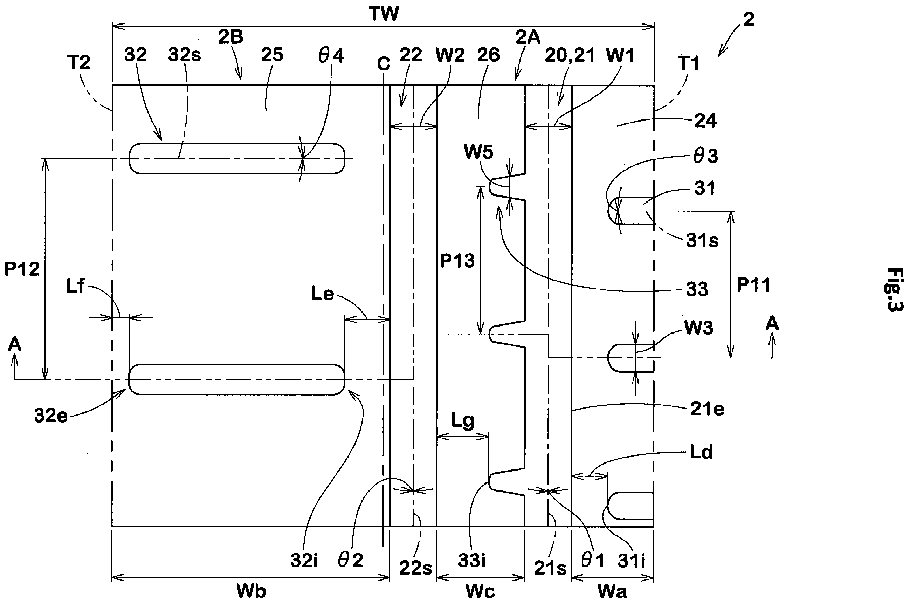

The first tread end T1 and a second tread end T2 described below are defined as ground contact positions at both ends in the tire axial direction in a state (hereinafter, referred to "standardized-load-applied state") in which a standardized load is applied to the tire 1 in the standardized state, and the tire 1 is brought into contact with a plane at a camber angle of 0°. The length in the tire axial direction between the first tread end T1 and the second tread end T2 is defined as a tread width TW (shown in FIG. 3).

The "standardized load" refers to a load that is defined, in a standard system including a standard on which the tire is based, by the standard for each tire, and is "maximum load capacity" in the JATMA standard, the maximum value recited in the table "TIRE LOAD LIMITS AT VARIOUS COLD INFLATION PRESSURES" in the TRA standard, or "LOAD CAPACITY" in the ETRTO standard, for pneumatic tires for which various standards are defined. In other words, the first tread end T1 and the second tread end T2 can be considered to be both ends, in the tire axial direction, of the tread portion 2 which comes into contact with a plane in running at 100% of the load index.

The first profile P1 further includes a first connection point 14, an outer arc 16, and a third connection point 17. The first connection point 14 is a point at which the first arc 11 and the second arc 12 are connected to each other. The outer arc 16 is connected to the third arc 13 and extends outward in the tire axial direction. In the present embodiment, the outer arc 16 is a region that is not assumed to come into contact with the ground even in running, such as running on a circuit in a race, in which the load is higher than 100% of the load index. The third connection point 17 is a point at which the outer arc 16 and the third arc 13 are connected to each other. On both sides of each of the first connection point 14, the second connection point 15, and the third connection point 17 in the tire axial direction, the radius of curvature is changed.

A distance Lb by which an outer end 13e (coincides with the third connection point 17) of the third arc 13 in the tire axial direction and the tire equator C are distant in the tire axial direction is preferably 44% or more of the cross-sectional width Wt and more preferably 45% or more thereof, and preferably 48% or less thereof and more preferably 47% or less thereof. Since the distance Lb is 44% or more and 48% or less of the cross-sectional width Wt, the third arc 13 comes into contact with the ground and the outer arc 16 does not come into contact with the ground even in a running state in which the load is higher than 100% of the load index, so that a ground contact pressure can be inhibited from being locally increased.

The tread portion 2 includes the second tread end T2 disposed on the side opposite to the first tread end T1 side. On the tire meridional cross-section in the standardized state, the tread portion 2 includes a second profile P2 extending from the tire equator C toward the second tread end T2. The second profile P2 and the first profile P1 are line-symmetric with respect to the tire equator C. The second profile P2 having such a configuration also allows the third arc 13 to smoothly come into contact with the ground and allows a ground contact region to be increased, outside the second tread end T2, in a running state in which the load is higher than 100% of the load index. Therefore, the tire 1 of the present embodiment has more excellent uneven wear resistance and dry grip performance. The second profile P2 and the first profile P1 may not necessarily be line-symmetric.

The radius TR1 of curvature of the first arc 11 is preferably 600 mm or more and more preferably 700 mm or more, and preferably 1200 mm or less and more preferably 1100 mm or less. Since the radius TR1 of curvature is 600 mm or more and 1200 mm or less, the ground contact pressure can be made uniform from the first arc 11 to the third arc 13. The radius TR4 of curvature of the outer arc 16 is, but is not particularly limited to, preferably 15 mm or more and more preferably 20 mm or more, and preferably 45 mm or less and more preferably 40 mm or less.

In the present embodiment, the tread portion 2 has a designated mounting direction to a vehicle. In the present embodiment, the first tread end T1 is an inner tread end disposed on the inner side of a vehicle when the tire is mounted to the vehicle. In the present embodiment, the second tread end T2 is an outer tread end disposed on the outer side of the vehicle when the tire is mounted to the vehicle. In the description herein, a portion of the tread portion 2 between the tire equator C and the first tread end T1 is defined as an inner tread portion 2A, and a portion of the tread portion 2 between the tire equator C and the second tread end T2 is defined as an outer tread portion 2B. In general, a lateral force acting on the outer tread portion 2B is higher than a lateral force acting on the inner tread portion 2A during cornering.

FIG. 3 is a plan view showing a development of the tread portion 2. As shown in FIG. 3, the tread portion 2 has a plurality of circumferential grooves 20 extending in the tire circumferential direction. The plurality of circumferential grooves 20 include a first circumferential groove 21 closest to the first tread end T1.

The first circumferential groove 21 is disposed so as to overlap the second arc 12 (shown in FIG. 2). As shown in FIG. 2, a distance Lc by which an outer edge 21e of the first circumferential groove 21 in the tire axial direction and the second connection point 15 are distant in the tire axial direction is preferably 10 mm or more. Thus, the second connection point 15 at which the ground contact pressure may become high is distant from the first circumferential groove 21, so that uneven wear is inhibited from occurring near the first circumferential groove 21. If the distance Lc is excessively large, a region in the tire axial direction in which the third arc 13 is formed may be reduced. Therefore, the distance Lc is more preferably 15 mm or more, and preferably 30 mm or less and more preferably 25 mm or less.

As shown in FIG. 3, all of the plurality of the circumferential grooves 20 are disposed between the tire equator C and the first tread end T1 (inner tread end). In other words, all of the plurality of the circumferential grooves 20 are disposed in the inner tread portion 2A. Thus, stiffness of the outer tread portion 2B in the tire axial direction is maintained to be higher than stiffness of the inner tread portion 2A in the tire axial direction, so that the ground contact pressure is made uniform between the inner tread portion 2A and the outer tread portion 2B, and dry grip performance in cornering is enhanced.

In the present embodiment, the plurality of circumferential grooves 20 include a second circumferential groove 22 disposed between the first circumferential groove 21 and the tire equator C. In the present embodiment, the plurality of circumferential grooves 20 are formed of the first circumferential groove 21 and the second circumferential groove 22. The plurality of circumferential grooves 20 may include, for example, another circumferential groove (not shown).

For example, each of the first circumferential groove 21 and the second circumferential groove 22 linearly extends in parallel with the tire circumferential direction. Each of an angle θ1 of a groove-width center line 21s of the first circumferential groove 21 relative to the tire circumferential direction, and an angle θ2 of a groove-width center line 22s of the second circumferential groove 22 relative to the tire circumferential direction is preferably 5° or less, and is 0° in the present embodiment.

Each of a groove width W1 of the first circumferential groove 21 and a groove width W2 of the second circumferential groove 22 is preferably 4% or more of the tread width TW and more preferably 6% or more thereof, and preferably 14% or less thereof and more preferably 12% or less thereof. Each of a groove depth D1 (shown in FIG. 1) of the first circumferential groove 21 and a groove depth D2 of the second circumferential groove 22 is preferably 3 mm or more and more preferably 4 mm or more, and preferably 8 mm or less and more preferably 7 mm or less. The circumferential groove 20 having such a configuration allows enhancement of drainage performance while inhibiting stiffness of the tread portion 2 from being excessively reduced.

In the present embodiment, the tread portion 2 includes a first land portion 24 demarcated by the first circumferential groove 21 and the first tread end T1, and a second land portion 25 demarcated by the second circumferential groove 22 and the second tread end T2. The tread portion 2 includes, for example, a third land portion 26 demarcated by the first circumferential groove 21 and the second circumferential groove 22.

A tire axial width Wb of the second land portion 25 is set to be greater than a tire axial width Wc of the third land portion 26. The tire axial width Wc of the third land portion 26 is set to be greater than a tire axial width Wa of the first land portion 24.

The tire axial width Wa of the first land portion 24 is, but is not particularly limited to, preferably 5% or more of the tread width TW and more preferably 10% or more thereof, and preferably less than 25% thereof and more preferably 20% or less thereof. The tire axial width Wb of the second land portion 25 is preferably 40% or more of the tread width TW and more preferably 45% or more thereof, and preferably 60% or less thereof and more preferably 55% or less thereof. The tire axial width Wc of the third land portion 26 is preferably greater than 5% of the tread width TW and more preferably 10% or more thereof, and preferably 25% or less thereof and more preferably 20% or less thereof.

In the present embodiment, the first land portion 24 has a plurality of first lateral grooves 31 aligned at a first pitch length P11 in the tire circumferential direction. For example, the second land portion 25 has a plurality of second lateral grooves 32 aligned at a second pitch length P12 in the tire circumferential direction. The second pitch length P12 is preferably greater than the first pitch length P11. Thus, stiffness, in the tire circumferential direction, of the second land portion 25 disposed at the outer tread portion 2B is maintained to be higher than stiffness, in the tire circumferential direction, of the first land portion 24 disposed at the inner tread portion 2A. Therefore, a ground contact pressure is made uniform between the first land portion 24 and the second land portion 25. Accordingly, uneven wear resistance and dry grip performance are enhanced.

Each of the first lateral groove 31 and the second lateral groove 32 extends in parallel with the tire axial direction. Each of an angle θ3 of a groove-width center line 31s of the first lateral groove 31 relative to the tire axial direction and an angle θ4 of a groove-width center line 32s of the second lateral groove 32 relative to the tire axial direction is preferably 5° or less, and is 0° in the present embodiment.

The plurality of first lateral grooves 31 each include an inner end 31i, in the tire axial direction, which terminates in the first land portion 24 without connecting to the first circumferential groove 21, and are connected to the first tread end T1. The first lateral groove 31 having such a configuration allows enhancement of drainage performance while inhibiting stiffness of the first land portion 24 from being excessively reduced.

A groove width W3 of the first lateral groove 31 is preferably 45% or more of the groove width W1 of the first circumferential groove 21 and more preferably 50% or more thereof, and preferably 65% or less thereof and more preferably 60% or less thereof. A groove depth D3 (shown in FIG. 1) of the first lateral groove 31 is preferably 80% or more of the groove depth D1 of the first circumferential groove 21 and more preferably 90% or more thereof, and preferably 120% or less thereof and more preferably 110% or less thereof. The first lateral groove 31 enhances drainage performance and dry grip performance in a well-balanced manner.

A distance Ld by which the inner end 31i of the first lateral groove 31 and the outer edge 21e of the first circumferential groove 21 are distant in the tire axial direction is preferably 35% or more of the tire axial width Wa of the first land portion 24 and more preferably 40% or more thereof, and preferably 55% or less thereof and more preferably 50% or less thereof. Thus, the above-described effect is effectively exhibited.

Each of the plurality of second lateral grooves 32 includes an inner end 32i, in the tire axial direction, which terminates in the second land portion 25 without connecting to the second circumferential groove 22. The second lateral groove 32 having such a configuration inhibits reduction of lateral stiffness of the second land portion 25. Each of the plurality of second lateral grooves 32 includes an outer end 32e, in the tire axial direction, which terminates in the second land portion 25 without connecting to the second tread end T2.

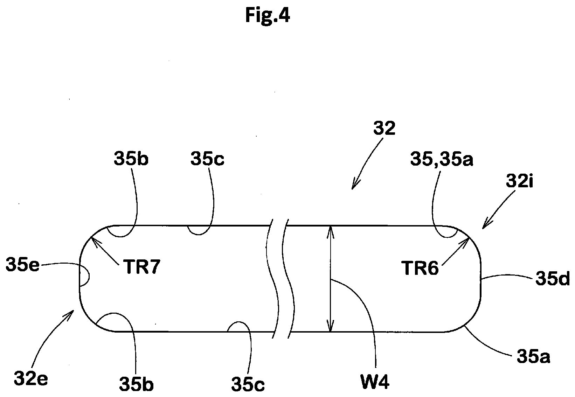

FIG. 4 is a schematic enlarged view of the second lateral groove 32 in FIG. 3. As shown in FIG. 4, in a planar view of the tread, a groove edge 35 of each of the plurality of second lateral grooves 32 includes inner arc portions 35a each extending on the inner end 32i side so as to form an arc, and outer arc portions 35b each extending on the outer end 32e side so as to form an arc. Each groove edge 35 has the inner arc portions 35a distant from each other in the tire circumferential direction and the outer arc portions 35b distant from each other in the tire circumferential direction. The groove edge 35 includes a pair of axial portions 35c connecting between the inner arc portions 35a and the outer arc portions 35b, a first circumferential portion 35d extending in the tire circumferential direction so as to connect between the inner arc portions 35a, and a second circumferential portion 35e extending in the tire circumferential direction so as to connect between the outer arc portions 35b. The axial portions 35c and the circumferential portions 35d, 35e linearly extend. In the description herein, a state where the groove edge 35 linearly extends includes not only a state where the radius of curvature is infinite (∞), but also a state where the groove edge 35 forms an arc having a radius of curvature of 400 mm or more, in a planar view of the tread.

The outer arc portion 35b is disposed in a region (on the second tread end T2 side) on which a high lateral force acts during cornering. Therefore, a radius TR7 of curvature of the outer arc portion 35b is preferably greater than a radius TR6 of curvature of the inner arc portion 35a. Thus, stiffness of the outer tread portion 2B (shown in FIG. 3) on the second tread end T2 side is maintained to be high, so that uneven wear resistance is enhanced. The radius TR7 of curvature of the outer arc portion 35b is, but is not particularly limited to, preferably 110% or more of the radius TR6 of curvature of the inner arc portion 35a and more preferably 120% or more thereof, and preferably 300% or less thereof and more preferably 200% or less thereof.

A groove width W4 of the second lateral groove 32 is preferably 55% or more of the groove width W2 (shown in FIG. 3) of the second circumferential groove 22 and more preferably 60% or more thereof, and preferably 75% or less thereof and more preferably 70% or less thereof. A groove depth D4 (shown in FIG. 1) of the second lateral groove 32 is preferably 80% or more of the groove depth D2 of the second circumferential groove 22 and more preferably 90% or more thereof, and preferably 120% or less thereof and more preferably 110% or less thereof.

As shown in FIG. 3, a distance Le by which the inner end 32i of the second lateral groove 32 and the second circumferential groove 22 are distant in the tire axial direction is greater than a distance Lf by which the outer end 32e of the second lateral groove 32 and the second tread end T2 are distant in the tire axial direction. Thus, stiffness of the second land portion 25 near the inner end 32i is maintained to be higher than stiffness of the second land portion 25 near the outer end 32e, and water in the second lateral groove 32 is likely to be easily discharged outward of the second tread end T2 from the outer end 32e. The distance Le is, but is not particularly limited to, preferably 10% or more of the tire axial width Wb of the second land portion 25 and more preferably 12% or more thereof, and preferably 20% or less thereof and more preferably 18% or less thereof. The distance Lf is preferably 4% or more of the tire axial width Wb of the second land portion 25 and more preferably 6% or more thereof, and preferably 12% or less thereof and more preferably 10% or less thereof.

The third land portion 26 has a plurality of third lateral grooves 33 aligned at a third pitch length P13 in the tire circumferential direction. The third pitch length P13 is preferably less than the second pitch length P12. Thus, stiffness, in the tire circumferential direction, of the second land portion 25 disposed at the outer tread portion 2B is maintained to be higher than stiffness, in the tire circumferential direction, of the third land portion 26 disposed at the inner tread portion 2A. Therefore, a ground contact pressure is made uniform between the second land portion 25 and the third land portion 26. Accordingly, uneven wear resistance and dry grip performance are enhanced. The third pitch length P13 is, for example, equal to the first pitch length P11.

The plurality of third lateral grooves 33 each include an inner end 33i, in the tire axial direction, which terminates in the third land portion 26 without connecting to the second circumferential groove 22, and are connected to the first circumferential groove 21. For example, the third lateral groove 33 has a groove width W5 that is continuously increased toward the first circumferential groove 21. The third lateral groove 33 having such a configuration facilitates discharge of water in the third lateral groove 33 into the first circumferential groove 21, and inhibits stiffness of the third land portion 26 from being excessively reduced.

A distance Lg by which the inner end 33i of the third lateral groove 33 and the second circumferential groove 22 are distant in the tire axial direction is preferably 50% or more of the tire axial width Wc of the third land portion 26 and more preferably 55% or more thereof, and preferably 70% or less thereof and more preferably 65% or less thereof. The distance Lg is 50% or more and 70% or less of the tire axial width Wc of the third land portion 26, so that drainage performance and dry grip performance can be enhanced in a well-balanced manner. A ratio (Lg/Wc) of the distance Lg to the tire axial width Wc of the third land portion 26 is greater than a ratio (Ld/Wa) of the distance Ld to the tire axial width Wa of the first land portion 24.

As shown in FIG. 1, a groove depth D5 of the third lateral groove 33 is preferably 80% or more of the groove depth D1 of the first circumferential groove 21 and more preferably 90% or more thereof, and preferably 120% or less thereof and more preferably 110% or less thereof. Thus, high drainage performance is exhibited.

Although the particularly preferred embodiment of the present invention has been described above in detail, the present invention is not limited to the illustrated embodiment but only by the appended claims.

### EXAMPLES

Pneumatic tires having the basic structure shown in FIG. 1 and the basic pattern shown in FIG. 3 were produced as test tires based on the specifications indicated in Table 1, and tested for dry grip performance, uneven wear resistance, and drainage performance. The main common matters were as follows.
Tire size: 215/45R17
Air pressure: 220 kPa
Rim: 17×7.5J

### <Dry grip performance, uneven wear resistance, and drainage performance>

The test tires of each example were mounted to all wheels of the following vehicle, and the vehicle was caused to run on a dry asphalt road surface in a circuit course and a wet asphalt road surface in a circuit course. During the running, a load higher than 100% of the load index acted on the tire. A test driver made sensory evaluation as to a degree of ease of running on the dry asphalt road surface in the circuit course, for dry grip performance. A test driver made sensory evaluation as to an uneven-wear generation state after running on the dry asphalt road surface in the circuit course, for uneven wear resistance. A test driver made sensory evaluation as to a degree of ease of running on the wet asphalt road surface in the circuit course, for drainage performance. The results are indicated as scores with the score of Comparative Example 1 being 100 in each test. The greater the value was, the better the result was.
Vehicle: a rear-wheel-drive passenger car having an engine displacement of 2400 cc
Slick tires were used in Comparative Examples 1, 2 and Examples 1, 11, tires having circumferential grooves and having no lateral grooves were used in Examples 2 to 4, and tires having circumferential grooves and lateral grooves were used in Examples 5 to 10.

In the tables,
"A" represents a configuration in which two circumferential grooves were disposed in the inner tread portion,
"B" represents a configuration in which the first circumferential groove was disposed in the inner tread portion and the second circumferential groove was disposed in the outer tread portion,
"C" represents a configuration in which the third lateral grooves were as shown in FIG. 3, and
"D" represents a configuration in which the third lateral groove was connected to the second circumferential groove, and was not connected to the first circumferential groove.

Tables 1 and 2 indicate the test results.

**[Table 1]**

| | Comp. Ex. 1 | Comp. Ex. 2 | Ex. 1 | Ex. 2 | Ex. 3 | Ex. 4 | Ex. 5 |
|---|---|---|---|---|---|---|---|
| TR2/TR1 (%) | 52 | 42 | 35 | 35 | 35 | 35 | 35 |
| TR3/TR2 (%) | 32 | 37 | 37 | 37 | 37 | 37 | 37 |
| La/Wt (%) | 29 | 32 | 32 | 32 | 32 | 32 | 32 |
| Lb/Wt (%) | 41 | 48 | 48 | 48 | 48 | 48 | 48 |
| Disposition of circumferential grooves | - | - | - | A | A | B | A |
| Lc (mm) | - | - | - | 4 | 14 | 14 | 14 |
| P11, P12 | - | - | - | - | - | - | P11=P12 |
| Shape of third lateral groove | - | - | - | - | - | - | C |
| Presence or absence of inner arc portion and outer arc portion | - | - | - | - | - | - | - |
| TR6, TR7 | - | - | - | - | - | - | - |
| Dry grip performance [Score: a larger value indicates better performance] | 100 | 102 | 105 | 106 | 107 | 106 | 108 |
| Uneven wear resistance [Score: a larger value indicates higher resistance] | 100 | 101 | 110 | 111 | 113 | 111 | 113 |

**[Table 2]**

| | Ex. 6 | Ex. 7 | Ex. 8 | Ex. 9 | Ex. 10 | Ex. 11 |
|---|---|---|---|---|---|---|
| TR2/TR1 (%) | 35 | 35 | 35 | 35 | 35 | 30 |
| TR3/TR2 (%) | 37 | 37 | 37 | 37 | 37 | 40 |
| La/Wt (%) | 32 | 32 | 32 | 32 | 32 | 34 |
| Lb/Wt (%) | 48 | 48 | 48 | 48 | 48 | 48 |
| Disposition of circumferential grooves | A | A | A | A | A | - |
| Lc (mm) | 14 | 14 | 14 | 14 | 14 | - |
| P11, P12 | P11>P12 | P11>P12 | P11>P12 | P11>P12 | P11>P12 | - |
| Shape of third lateral groove | C | D | C | C | C | - |
| Presence or absence of inner arc portion and outer arc portion | - | - | absent | present | present | - |
| TR6, TR7 | - | - | TR6=TR7 | TR6=TR7 | TR6<TR7 | - |
| Dry grip performance [Score: a larger value indicates better performance] | 111 | 110 | 109 | 111 | 109 | 103 |
| Uneven wear resistance [Score: a larger value indicates higher resistance] | 115 | 114 | 116 | 116 | 118 | 105 |

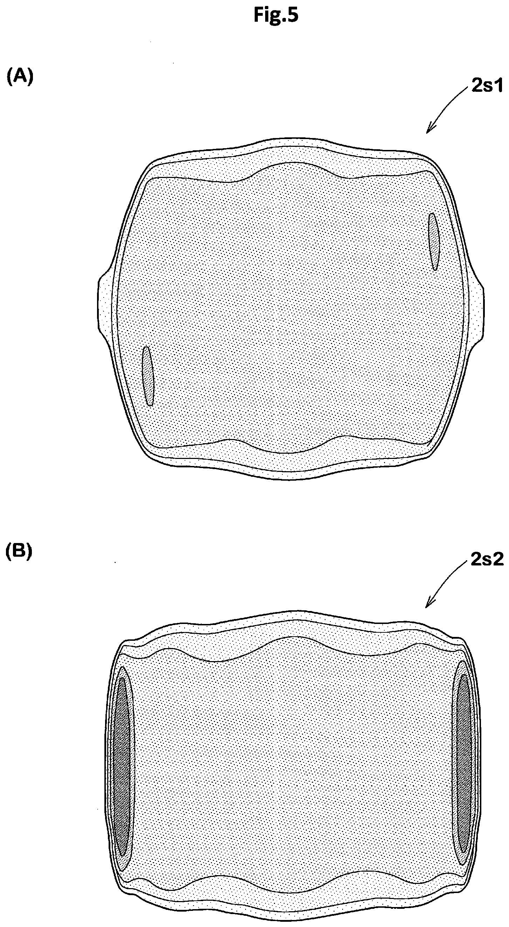

According to the test results, it was understood that the tires of the examples had enhanced dry grip performance and uneven wear resistance as compared with the tires of the comparative examples. FIG. 5(A) shows a ground contact pressure at a ground contact surface 2s1 of the slick tire having a profile of Example 1 in a state where the load was 110% of the load index, and FIG. 5(B) shows a ground contact pressure at a ground contact surface 2s2 of the slick tire having a profile of Comparative example 1 in a state where the load was 110% of the load index. In FIG. 5, a higher-ground-contact-pressure portion is indicated by a darker color. As shown in FIG. 5, the ground contact pressure was relatively uniform in the profile of Example 1 as compared with the profile of Comparative example 1.

## Claims

1. A pneumatic tire (1) comprising
a tread portion (2), wherein
the tread portion (2) includes a first profile (P1) extending from a tire equator (C) toward a first tread end (T1) on a tire meridional cross-section in a standardized state,
the first profile (P1) includes a first arc (11) extending outward from the tire equator (C) in a tire axial direction, a second arc (12) which is connected to the first arc (11) and extends outward in the tire axial direction, a third arc (13) which is connected to the second arc (12) and extends outward in the tire axial direction, and a second connection point (15) at which the second arc (12) and the third arc (13) are connected to each other,
each of the first arc (11), the second arc (12), and the third arc (13) has a single radius of curvature, and
the third arc (13) extends outward in the tire axial direction beyond the first tread end (T1),
**characterized in that**
a radius TR2 of curvature of the second arc is 30% to 40% of a radius TR1 of curvature of the first arc,
a radius TR3 of curvature of the third arc is 25% to 40% of the radius TR2 of curvature of the second arc, and
a distance (La) by which the second connection point (15) and the tire equator (C) are distant in the tire axial direction is 30% to 34% of a cross-sectional width (Wt) of the tire (1).

2. The pneumatic tire (1) according to claim 1, wherein a distance (Lb) by which an outer end (13e) of the third arc (13) in the tire axial direction and the tire equator (C) are distant in the tire axial direction is 44% to 48% of the cross-sectional width (Wt).

3. The pneumatic tire (1) according to claim 1 or 2, wherein the radius TR1 of curvature of the first arc (11) is 600 to 1200 mm.

4. The pneumatic tire (1) according to any one of claims 1 to 3, wherein
the tread portion (2) includes a second tread end (T2) disposed on a side opposite to the first tread end (T1) side,
the tread portion (2) includes a second profile (P2) extending from the tire equator (C) toward the second tread end (T2) on the tire meridional cross-section in the standardized state, and
the second profile (P2) and the first profile (P1) are line-symmetric with respect to the tire equator (C).

5. The pneumatic tire (1) according to any one of claims 1 to 4, wherein
the tread portion (2) has a designated mounting direction to a vehicle, and
the first tread end (T1) is an inner tread end disposed on an inner side of a vehicle when the tire (1) is mounted to the vehicle.

6. The pneumatic tire (1) according to any one of claims 1 to 5, wherein
the tread portion (2) has a plurality of circumferential grooves (20) extending in a tire circumferential direction,
the plurality of circumferential grooves (20) include a first circumferential groove (21) closest to the first tread end (T1),
the first circumferential groove (21) is disposed so as to overlap the second arc (12), and
a distance (Lc) by which an outer edge (21e) of the first circumferential groove (21) in the tire axial direction and the second connection point (15) are distant in the tire axial direction is 10 mm or more.

7. The pneumatic tire (1) according to claim 6, wherein all of the plurality of circumferential grooves (20) are disposed between the tire equator (C) and the first tread end (T1).

8. The pneumatic tire (1) according to claim 6 or 7, wherein
the plurality of circumferential grooves (20) include a second circumferential groove (22) disposed between the first circumferential groove (21) and the tire equator (C),
the tread portion (2) includes the second tread end (T2) disposed on the side opposite to the first tread end (T1) side, a first land portion (24) demarcated by the first circumferential groove (21) and the first tread end (T1), and a second land portion (25) demarcated by the second circumferential groove (22) and the second tread end (T2),
the first land portion (24) has a plurality of first lateral grooves (31) aligned at a first pitch length (P11) in the tire circumferential direction,
the second land portion (25) has a plurality of second lateral grooves (32) aligned at a second pitch length (P12) in the tire circumferential direction, and
the second pitch length (P12) is greater than the first pitch length (P11).

9. The pneumatic tire (1) according to claim 8, wherein the plurality of first lateral grooves (31) each include an inner end (31i), in the tire axial direction, which terminates in the first land portion (24) without connecting to the first circumferential groove (21), and are connected to the first tread end (T1).

10. The pneumatic tire (1) according to claim 8 or 9, wherein each of the plurality of second lateral grooves (32) includes an inner end (32i), in the tire axial direction, which terminates in the second land portion (25) without connecting to the second circumferential groove (22).

11. The pneumatic tire (1) according to claim 10, wherein each of the plurality of second lateral grooves (32) includes an outer end (32e), in the tire axial direction, which terminates in the second land portion (25) without connecting to the second tread end (T2).

12. The pneumatic tire (1) according to claim 11, wherein a groove edge (35) of each of the plurality of second lateral grooves (32) includes an inner arc portion (35a) extending on the inner end (32i) side so as to form an arc, and an outer arc portion (35b) extending on the outer end (32e) side so as to form an arc, in a planar view of a tread.

13. The pneumatic tire (1) according to claim 12, wherein a radius TR7 of curvature of the outer arc portion (35b) is greater than a radius TR6 of curvature of the inner arc portion (35a).

14. The pneumatic tire (1) according to any one of claims 8 to 13, wherein
the tread portion (2) includes a third land portion (26) demarcated by the first circumferential groove (21) and the second circumferential groove (22),
the third land portion (26) has a plurality of third lateral grooves (33) aligned at a third pitch length (P13) in the tire circumferential direction, and
the third pitch length (P13) is less than the second pitch length (P12).

15. The pneumatic tire (1) according to claim 14, wherein the plurality of third lateral grooves (33) each include an inner end (33i), in the tire axial direction, which terminates in the third land portion (26) without connecting to the second circumferential groove (22), and are connected to the first circumferential groove (21).

## Patentansprüche

1. Luftreifen (1), umfassend
einen Laufflächenabschnitt (2), wobei
der Laufflächenabschnitt (2) ein erstes Profil (P1) umfasst, das sich von einem Reifenäquator (C) zu einem ersten Laufflächenende (T1) auf einem Reifenmeridianquerschnitt in einem standardisierten Zustand erstreckt,
das erste Profil (P1) einen ersten Bogen (11), der sich von dem Reifenäquator (C) in einer Reifenaxialrichtung nach außen erstreckt, einen zweiten Bogen (12), der mit dem ersten Bogen (11) verbunden ist und sich in der Reifenaxialrichtung nach außen erstreckt, einen dritten Bogen (13), der mit dem zweiten Bogen (12) verbunden ist und sich in der Reifenaxialrichtung nach außen erstreckt, und einen zweiten Verbindungspunkt (15), an dem der zweite Bogen (12) und der dritte Bogen (13) miteinander verbunden sind, umfasst,
jeder von dem ersten Bogen (11), dem zweiten Bogen (12) und dem dritten Bogen (13) einen einzigen Krümmungsradius aufweist,
der zweite Verbindungspunkt (15) von dem ersten Laufflächenende (T1) in der Reifenaxialrichtung innen angeordnet ist,
der dritte Bogen (13) sich in der Reifenaxialrichtung über das erste Laufflächenende (T1) hinaus nach außen erstreckt, und
**dadurch gekennzeichnet, dass**
ein Krümmungsradius TR2 des zweiten Bogens 30 % bis 40 % eines Krümmungsradius TR1 des ersten Bogens beträgt,
ein Krümmungsradius TR3 des dritten Bogens 25 % bis 40 % des Krümmungsradius TR2 des zweiten Bogens beträgt,
ein Abstand (La), um den der zweite Verbindungspunkt (15) und der Reifenäquator (C) in der Reifenaxialrichtung entfernt sind, 30 % bis 34 % einer Querschnittsbreite (Wt) des Reifens (1) beträgt,

2. Luftreifen (1) nach Anspruch 1, wobei ein Abstand (Lb), um den ein äußeres Ende (13e) des dritten Bogens (13) in der Reifenaxialrichtung und der Reifenäquator (C) in der Reifenaxialrichtung entfernt sind, 44 % bis 48 % der Querschnittsbreite (Wt) beträgt.

3. Luftreifen (1) nach Anspruch 1 oder 2, wobei der Krümmungsradius TR1 des ersten Bogens (11) 600 bis 1200 mm beträgt.

4. Luftreifen (1) nach einem der Ansprüche 1 bis 3, wobei
der Laufflächenabschnitt (2) ein zweites Laufflächenende (T2) umfasst, das auf einer Seite gegenüber der Seite des ersten Laufflächenendes (T1) angeordnet ist,
der Laufflächenabschnitt (2) ein zweites Profil (P2) umfasst, das sich von dem Reifenäquator (C) zu dem zweiten Laufflächenende (T2) auf dem Reifenmeridianquerschnitt in dem standardisierten Zustand erstreckt, und
das zweite Profil (P2) und das erste Profil (P1) in Bezug auf den Reifenäquator (C) liniensymmetrisch sind.

5. Luftreifen (1) nach einem der Ansprüche 1 bis 4, wobei
der Laufflächenabschnitt (2) eine bestimmte Montagerichtung an einem Fahrzeug aufweist, und
das erste Laufflächenende (T1) ein inneres Laufflächenende ist, das auf einer Innenseite eines Fahrzeugs angeordnet ist, wenn der Reifen (1) an dem Fahrzeug montiert ist.

6. Luftreifen (1) nach einem der Ansprüche 1 bis 5, wobei
der Laufflächenabschnitt (2) eine Vielzahl von Umfangsrillen (20) aufweist, die sich in einer Reifenumfangsrichtung erstrecken,
die Vielzahl von Umfangsrillen (20) eine erste Umfangsrille (21) umfasst, die dem ersten Laufflächenende (T1) am nächsten ist,
die erste Umfangsrille (21) so angeordnet ist, dass sie den zweiten Bogen (12) überlappt, und
ein Abstand (Lc), um den eine Außenkante (21e) der ersten Umfangsrille (21) in der Reifenaxialrichtung und der zweite Verbindungspunkt (15) in der Reifenaxialrichtung entfernt sind, 10 mm oder mehr beträgt.

7. Luftreifen (1) nach Anspruch 6, wobei alle der Vielzahl von Umfangsrillen (20) zwischen dem Reifenäquator (C) und dem ersten Laufflächenende (T1) angeordnet sind.

8. Luftreifen (1) nach Anspruch 6 oder 7, wobei
die Vielzahl von Umfangsrillen (20) eine zweite Umfangsrille (22) umfasst, die zwischen der ersten Umfangsrille (21) und dem Reifenäquator (C) angeordnet ist,
der Laufflächenabschnitt (2) das zweite Laufflächenende (T2), das auf der Seite gegenüber der Seite des ersten Laufflächenendes (T1) angeordnet ist, einen ersten Landabschnitt (24), der durch die erste Umfangsrille (21) und das erste Laufflächenende (T1) abgegrenzt ist, und einen zweiten Landabschnitt (25), der durch die zweite Umfangsrille (22) und das zweite Laufflächenende (T2) abgegrenzt ist, umfasst,
der erste Landabschnitt (24) eine Vielzahl von ersten Querrillen (31) aufweist, die mit einer ersten Teilungslänge (P11) in der Reifenumfangsrichtung ausgerichtet sind,
der zweite Landabschnitt (25) eine Vielzahl von zweiten Querrillen (32) aufweist, die mit einer zweiten Teilungslänge (P12) in der Reifenumfangsrichtung ausgerichtet sind, und
die zweite Teilungslänge (P12) größer als die erste Teilungslänge (P11) ist.

9. Luftreifen (1) nach Anspruch 8, wobei die Vielzahl von ersten Querrillen (31) jeweils ein inneres Ende (31i) in der Reifenaxialrichtung umfasst, das in dem ersten Landabschnitt (24) endet, ohne mit der ersten Umfangsrille (21) verbunden zu sein, und mit dem ersten Laufflächenende (T1) verbunden ist.

10. Luftreifen (1) nach Anspruch 8 oder 9, wobei jede der Vielzahl von zweiten Querrillen (32) ein inneres Ende (32i) in der Reifenaxialrichtung umfasst, das in dem zweiten Landabschnitt (25) endet, ohne dass es mit der zweiten Umfangsrille (22) verbunden ist.

11. Luftreifen (1) nach Anspruch 10, wobei jede der Vielzahl von zweiten Querrillen (32) ein äußeres Ende (32e) in der Reifenaxialrichtung umfasst, das in dem zweiten Landabschnitt (25) endet, ohne dass es mit dem zweiten Laufflächenende (T2) verbunden ist.

12. Luftreifen (1) nach Anspruch 11, wobei eine Rillenkante (35) jeder der Vielzahl von zweiten Querrillen (32) einen inneren Bogenabschnitt (35a), der sich so auf der Seite des inneren Endes (32i) erstreckt, dass er einen Bogen bildet, und einen äußeren Bogenabschnitt (35b), der sich so auf der Seite des äußeren Endes (32e) erstreckt, dass er einen Bogen bildet, in einer Draufsicht einer Lauffläche umfasst.

13. Luftreifen (1) nach Anspruch 12, wobei ein Krümmungsradius TR7 des äußeren Bogenabschnitts (35b) größer als ein Krümmungsradius TR6 des inneren Bogenabschnitts (35a) ist.

14. Luftreifen (1) nach einem der Ansprüche 8 bis 13, wobei
der Laufflächenabschnitt (2) einen dritten Landabschnitt (26) umfasst, der durch die erste Umfangsrille (21) und die zweite Umfangsrille (22) abgegrenzt ist,
der dritte Landabschnitt (26) eine Vielzahl von dritten Querrillen (33) aufweist, die mit einer dritten Teilungslänge (P13) in der Reifenumfangsrichtung ausgerichtet sind, und
die dritte Teilungslänge (P13) kleiner als die zweite Teilungslänge (P12) ist.

15. Luftreifen (1) nach Anspruch 14, wobei die Vielzahl von dritten Querrillen (33) jeweils ein inneres Ende (33i) in der Reifenaxialrichtung umfasst, das in dem dritten Landabschnitt (26) endet, ohne dass es mit der zweiten Umfangsrille (22) verbunden ist, und mit der ersten Umfangsrille (21) verbunden ist.

## Revendications

1. Bandage pneumatique (1) comprenant
une portion formant bande de roulement (2), dans lequel la portion formant bande de roulement (2) inclut un premier profil (P1) s'étendant depuis un équateur de pneumatique (C) vers une première extrémité de bande de roulement (T1) sur une section transversale méridienne du pneumatique dans un état standardisé,
le premier profil (P1) inclut un premier arc (11) s'étendant vers l'extérieur depuis l'équateur de pneumatique (C) dans une direction axiale du pneumatique, un deuxième arc (12) qui est connecté au premier arc (11) et qui s'étend vers l'extérieur dans la direction axiale du pneumatique, et un troisième arc (13) qui est connecté au deuxième arc (12) et qui s'étend vers l'extérieur dans la direction axiale du pneumatique, et un deuxième point de connexion (15) au niveau duquel le deuxième arc (12) et le troisième arc (13) sont connectés l'un à l'autre,
chacun du premier arc (11), du deuxième arc (12) et du troisième arc (13) a un rayon de courbure unique,
le deuxième point de connexion (15) est disposé à l'intérieur de la première extrémité de bande de roulement (T1) dans la direction axiale du pneumatique, et
le troisième arc (13) s'étend vers l'extérieur dans la direction axiale du pneumatique au-delà de la première extrémité de bande de roulement (T1),
**caractérisé en ce que**
un rayon TR2 de courbure du deuxième arc est de 30 % à 40 % d'un rayon TR1 de courbure du premier arc,
un rayon TR3 de courbure du troisième arc est de 25 % à 40 % du rayon TR2 de courbure du deuxième arc, et
une distance (La) à laquelle le deuxième point de connexion (15) et l'équateur de pneumatique (C) sont distants dans la direction axiale du pneumatique est de 30 % à 34 % d'une largeur en section transversale (Wt) du pneumatique (1).

2. Bandage pneumatique (1) selon la revendication 1, dans lequel une distance (Lb) à laquelle une extrémité extérieure (13e) du troisième arc (13) dans la direction axiale du pneumatique et l'équateur de pneumatique (C) sont distants dans la direction axiale du pneumatique est de 44 % à 48 % de la largeur en section transversale (Wt).

3. Bandage pneumatique (1) selon la revendication 1 ou 2, dans lequel le rayon TR1 de courbure du premier arc (11) est de 600 à 1 200 mm.

4. Bandage pneumatique (1) selon l'une quelconque des revendications 1 à 3, dans lequel
la portion formant bande de roulement (2) inclut une deuxième extrémité de bande de roulement (T2) disposée sur un côté opposé au côté de la première extrémité de bande de roulement (T1),
la portion formant bande de roulement (2) inclut un deuxième profil (P2) s'étendant depuis l'équateur de pneumatique (C) vers la deuxième extrémité de bande de roulement (T2) sur la section transversale méridienne du pneumatique dans l'état standardisé, et
le deuxième profil (P2) et le premier profil (P1) sont en symétrie linéaire par rapport à l'équateur de pneumatique (C).

5. Bandage pneumatique (1) selon l'une quelconque des revendications 1 à 4, dans lequel
la portion formant bande de roulement (2) a une direction de montage par conception sur un véhicule, et
la première extrémité de bande de roulement (T1) est une extrémité de bande de roulement intérieure disposée sur un côté intérieur d'un véhicule quand le pneumatique (1) est monté sur le véhicule.

6. Bandage pneumatique (1) selon l'une quelconque des revendications 1 à 5, dans lequel
la portion formant bande de roulement (2) a une pluralité de rainures circonférentielles (20) s'étendant dans une direction circonférentielle du pneumatique,
la pluralité de rainures circonférentielles (20) incluent une première rainure circonférentielle (21) la plus proche de la première extrémité de bande de roulement (T1),
la première rainure circonférentielle (21) est disposée de manière à être en chevauchement avec le deuxième arc (12), et
une distance (Lc) à laquelle un bord extérieur (21e) de la première rainure circonférentielle (21) dans la direction axiale du pneumatique et le deuxième point de connexion (15) sont distants dans la direction axiale du pneumatique est de 10 mm ou plus.

7. Bandage pneumatique (1) selon la revendication 6, dans lequel la totalité de la pluralité de rainures circonférentielles (20) sont disposées entre l'équateur de pneumatique (C) et la première extrémité de bande de roulement (T1).

8. Bandage pneumatique (1) selon la revendication 6 ou 7, dans lequel la pluralité de rainures circonférentielles (20) incluent une deuxième rainure circonférentielle (22) disposée entre la première rainure circonférentielle (21) et l'équateur de pneumatique (C),
la portion formant bande de roulement (2) inclut la deuxième extrémité de bande de roulement (T2) disposée sur le côté opposé au côté de la première extrémité de bande de roulement (T1), une première portion en relief (24) délimitée par la première rainure circonférentielle (21) et la première extrémité de bande de roulement (T1), et une deuxième portion en relief (25) délimitée par la deuxième rainure circonférentielle (22) et la deuxième extrémité de bande de roulement (T2),
la première portion en relief (24) a une pluralité de premières rainures latérales (31) alignées à une première longueur de pas (P11) dans la direction circonférentielle du pneumatique,
la deuxième portion en relief (25) a une pluralité de deuxièmes rainures latérales (32) alignées à une deuxième longueur de pas (P12) dans la direction circonférentielle du pneumatique, et
la deuxième longueur de pas (P12) est supérieure à la première longueur de pas (P11).

9. Bandage pneumatique (1) selon la revendication 8, dans lequel la pluralité de première rainures latérales (31) incluent chacune une extrémité intérieure (31i), dans la direction axiale du pneumatique, qui se termine dans la première portion en relief (24) sans connexion à la première rainure circonférentielle (21), et sont connectées à la première extrémité de bande de roulement (T1).

10. Bandage pneumatique (1) selon la revendication 8 ou 9, dans lequel chacune de la pluralité de deuxièmes rainures latérales (32) inclut une extrémité intérieure (32i), dans la direction axiale du pneumatique, qui se termine dans la deuxième portion en relief (25) sans connexion à la deuxième rainure circonférentielle (22).

11. Bandage pneumatique (1) selon la revendication 10, dans lequel chacune de la pluralité de deuxièmes rainures latérales (32) inclut une extrémité extérieure (32e), dans la direction axiale du pneumatique, qui se termine dans la deuxième portion en relief (25) sans connexion à la deuxième extrémité de bande de roulement (T2).

12. Bandage pneumatique (1) selon la revendication 11, dans lequel un bord de rainure (35) de chacune de la pluralité de deuxièmes rainures latérales (32) inclut une portion arquée intérieure (35a) s'étendant sur le côté de l'extrémité intérieure (32i) pour former un arc, et une portion arquée extérieure (35b) s'étendant sur le côté de l'extrémité extérieure (32e) pour former un arc, dans une vue en plan d'une bande de roulement.

13. Bandage pneumatique (1) selon la revendication 12, dans lequel un rayon TR7 de courbure de la portion arquée extérieure (35b) est supérieur à un rayon TR6 de courbure de la portion arquée intérieure (35a).

14. Bandage pneumatique (1) selon l'une quelconque des revendications 8 à 13, dans lequel
la portion formant bande de roulement (2) inclut une troisième portion en relief (26) délimitée par la première rainure circonférentielle (21) et la deuxième rainure circonférentielle (22),
la troisième portion en relief (26) a une pluralité de troisièmes rainures latérales (33) alignées à une troisième longueur de pas (P13) dans la direction circonférentielle du pneumatique, et
la troisième longueur de pas (P13) est inférieure à la deuxième longueur de pas (P12).

15. Bandage pneumatique (1) selon la revendication 14, dans lequel la pluralité de troisièmes rainures latérales (33) incluent chacune une extrémité intérieure (33i), dans la direction axiale du pneumatique, qui se termine dans la troisième portion en relief (26) sans connexion à la deuxième rainure circonférentielle (22), et sont connectées à la première rainure circonférentielle (21).
